Europäisches Patentamt

European Patent Office

Office européen des brevets

(11) Publication number: **0 230 872**
A1

## EUROPEAN PATENT APPLICATION

(21) Application number: 87100018.8

(22) Date of filing: 02.01.87

(51) Int. Cl.³: **A 47 J 36/34**
A 47 J 47/16, A 47 J 36/12
A 47 G 23/06

(30) Priority: 02.01.86 NO 860006

(43) Date of publication of application:
05.08.87 Bulletin 87/32

(84) Designated Contracting States:
DE GB SE

(71) Applicant: Ardal og Sunndal Verk a.s.
Sörkedalsveien 6
Oslo 3(NO)

(72) Inventor: Karlsen, Arne Trygve Emil
Bryggebakken 2
N-1560 Larkollen(NO)

(74) Representative: Patentanwälte Zellentin
Zweibrückenstrasse 15
D-8000 München 2(DE)

(54) Stand for cooking vessels.

(57) Stand for cooking vessels, such as a pot or pan, which may also be used as a tray.

The stand consists of a heat-resistant disc (1) with fixedly mounted handles (2) for carrying a cooking vessel with its content. The stand includes a cover-holder (3) which is also fixedly mounted to the disc and is adapted for holding the cover while the food is being served.

Fig 1.

EP 0 230 872 A1

D-8000 München 2, Zweibrückenstraße 15, Telefon 089-22 45 85, Telex 5-22 903, Fax 089-22 20 66

Ardal og Sunndal Verk a.s.
Oslo / Norwegen

January 2, 1987
Eu 86 523   RZ/01

## Stand for Cooking Vessels

The present invention relates to a stand or portable under-mat for cooking vessels, such as a pot or pan, which also may be used as a serving tray.

It is commonly known to serve hot food directly from a cooking vessel in which the food has been prepared. Necessarily, the hot cooking vessel then has to be placed on some kind of support. Thus, it is previously known several different discs or similar devices which may be used as stands for cooking vessels. Some of these are also provided with handles and are formed in such a way that they, togehter with a cooking vessel, have an attractive appearance when placed on the table.

Cooking vessels usually have separate covers which are kept on the vessels when the vessels are placed on the table or when food is not served, to keep the content warm. However, when food is served from the cooking vessels, the cover has to be placed somewhere during the serving operation. Thus, a disadvantage with the known stands or under-mats is that it has not been considered where to put the hot cover when food is being served.

The aim of the present invention is to provide a stand which allows to place - especially hot - vessels directly on tables without pot cloth and which is able to use it as a serving tray to receive the cover during the serving of the food.

According to the invention the stand includes a heat-resistant disc which has one or two handles for carrying a hot cooking vessel with its content, and which has a holder on which the cover can be placed.

The handles and cover-holder may be fixedly mounted to the heat-resistant disc or plate, or the handles and cover-holder may be made of an integrated, firm construction with a heat-resistant disc loosely secured within said construction.

In a preferred embodiment of the invention the handles and cover-holder are made of metal-wire which are fixedly mounted to a disc made of wood. Preferably, the handles and cover-holder are made of 6 mm stainless steel wire.

Further, it is a preferred embodiment of the invention that the handels and cover-holder are adapted for various cooking vessels.

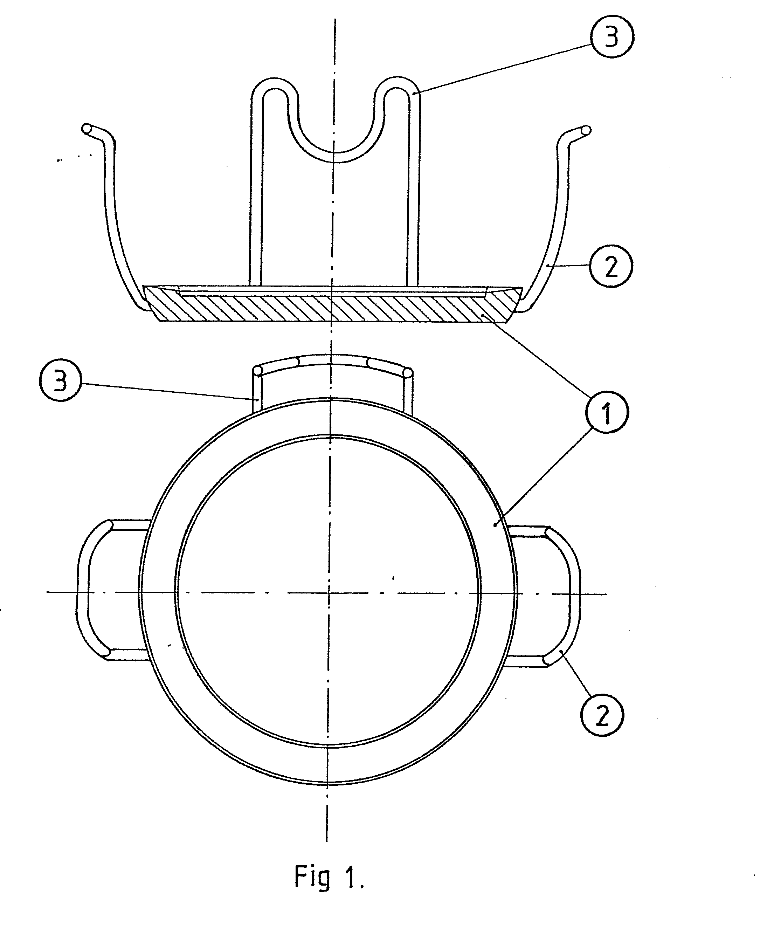

A typical example of the invention is shown in the accompanying drawing, Fig. 1, in which 1 is the heat-resistant disc, 2 are the handles and 3 is the cover-holder.

-3-

## Claims

1. Portable stand for cooking vessels, such as a pot or pan, c h a r a c t e r i z e d  i n  t h a t
the stand is made of a heat-resistant disc (1) with handles (2) and a cover-holder (3) to place the cover of a cooking vessel.

2. Stand according to claim 1,
characterized in that
the handles (2) and cover-holder (3) are fixedly mounted to the heat-resistant disc (1).

3. Stand according to claim 1,
characterized in that
the handles (2) and the cover-holder (3) form a firm, integrated construction with the heat-resistant disc (1) loosely held within said construction.

4. Stand according to claim 2,
characterized in that
the handles (2) and the cover-holder (3) are made of metal wires which are fixedly mounted to a wooden disc (1).

5. Stand according to claim 4,
characterized in that
the handles (2) and the cover-holder (3) are made of 6 mm stainless steel wire.

6. Stand according to one of claims 1 to 5,
characterized in that
the handles (2) and the cover-holder (3) are adapted for various cooking vessels and covers.

Fig 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-1 745 548  (H. LERNER) <br> * Figures 5,7 * | 1 | A 47 J  36/34 <br> A 47 J  47/16 <br> A 47 J  36/12 <br> A 47 G  23/06 |
| Y | FR-A-2 191 859  (L. BAYLE) <br> * Whole document * | 1 | |
| A | | 2,4 | |
| Y | GB-A-  413 470  (J. BELT) <br> * Figures 1,2 * | 1 | |
| Y | GB-A-  427 784  (S. GREENBERG & CO. LTD) <br> * Whole document * | 1 | |
| A | | 3 | TECHNICAL FIELDS SEARCHED (Int. Cl.4) |
| A | US-A-3 028 972  (R.E. GUILLAUMANT) <br> * Figures 1,3 * | 1 | A 47 J <br> A 47 G |
| A | FR-A-1 303 302  (R.C.J.L. MANGEOT) <br> * Figures 1-3 * | 1 | |
| A | CH-A- 228 886  (R. BALSIGER) <br> * Whole document * | 1,6 | |

-/-

The present search report has been drawn up for all claims

| Place of search | Date of completion of the search | Examiner |
|---|---|---|
| THE HAGUE | 13-04-1987 | SCHARTZ J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

0230872

Application number

EP 87 10 0018

# EUROPEAN SEARCH REPORT

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | GB-A- 544 154 (W. HAIG-FERGUSON) * Whole document * | 1 | |
| A | FR-A- 573 444 (E.P. BLONDEL) * Whole document * | 1 | |
| A | GB-A- 623 618 (SELUART ENGINEERING CO. LTD) * Whole document * | 1 | |
| | | | TECHNICAL FIELDS SEARCHED (Int. Cl.4) |

The present search report has been drawn up for all claims

| Place of search THE HAGUE | Date of completion of the search 13-04-1987 | Examiner SCHARTZ J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
Γ : document cited in the application
L : document cited for other reasons

& : member of the same patent family, corresponding document

EPO Form 1503 03.82

European Patent Office